# EUROPÄISCHE PATENTANMELDUNG

(11) **EP 1 797 776 A1**
(43) Veröffentlichungstag der Anmeldung: **20.06.2007**
(21) Anmeldenummer: 05792694.1
(22) Anmeldetag: 05.09.2005
(51) Int. Cl.: A23L 2/54, A23L 2/02, A23L 2/38, C12C 12/00

(54) **GETRÄNK**

(30) Priorität: 10.09.2004 RU 2004127001
(71) Anmelder: Kutyev, Anatoly Anatolyevich, Moscow, 117133 (RU)
(72) Erfinder: Kutyev, Anatoly Anatolyevich, Moscow, 117133 (RU)
(74) Vertreter: Jeck, Anton
(86) Internationale Anmeldenummer: PCT/RU2005/000449
(87) Internationale Veröffentlichungsnummer: WO 2006/031153

(57) **Zusammenfassung**

Die Erfindung betrifft die Lebensmittelindustrie, insbesondere Getränke, die über belustigende Eigenschaften verfügen. Das alkoholfreie Getränk besteht aus einer flüssigen Basis und Stickstoffdioxid, das in einer Menge von höchstens 40 g pro 1 I flüssige Basis verwendet wird. Das Gas wird unter einer Temperatur von 1-25° C und einem Druck von 1-21 atm gemäß dem Getränkeherstellungsverfahren eingebracht. Die Erfindung macht es möglich, die Endproduktqualität durch Aufrechterhaltung des Getränkegeschmacks und -dufts während einer Lagerzeit zu verbessern.

## Beschreibung

Die Erfindung gehört in den Bereich der Lebensmittelindustrie, insbesondere zu den Getränken, die über "belustigende" Eigenschaften verfügen.

Bekannt ist ein Getränk, das das Edelgas Argon enthält, dessen Menge mindestens 3 Vol.-% beträgt (s. RU 2218055 C2, A23L2/54, Veröffentlichung am 10.12.2003). Der Nachteil dieses Getränks ist dessen energieintensive und komplexe Produktion.

Der am nächsten kommende Prototyp ist ein Getränk, das Stickstoffdioxid und eine flüssige Basis, für die Wasser verwendet wird (s. RU 92010834 A, Veröffentlichung am 27.03.1995), enthält.

Von Nachteil ist, dass dieses Getränk nur dazu benutzt wird, um eine gute Stimmung aufrecht zu erhalten, d. h., dass es nur eine "berauschende und belustigende" Wirkung erzeugt.

Die Aufgabe der Erfindung besteht darin, ein Getränk zu schaffen, dass aus einer flüssigen Basis mit darin gelöstem Stickstoffdioxid besteht und eine berauschende und belustigende Wirkung auf den Konsumenten ausübt, wobei die Getränkequalität hinsichtlich der Aufrechterhaltung von Geschmack- und Aromaeigenschaften im Laufe der Aufbewahrung erhöht ist.

Diese Aufgabe wird dadurch gelöst, dass das Stickstoffdioxid in einer Menge von höchstens 40 g/l flüssige Basis bei einer Temperatur von 1-25° C und unter einem Druck von 1-21 atm in die Basis eingebracht wird.

Als flüssige Basis enthält das Getränk Mineral- bzw. Trinkwasser, Saft oder verdünnten Saft sowie ein alkoholfreies Getränk oder Bier oder ein alkoholhaltiges Getränk. Ferner kann das Getränk mit Sauerstoff oder Kohlensäuregas oder mit einer Mischung aus Sauerstoff und Kohlensäuregas zusätzlich angereichert werden. Es können auch Zucker oder Süßstoffe, Vitamine und Spurenelemente eingebracht werden. Schließlich kann eine Mischung aus den Vitaminen A, B₁, B₂, B₆, B₁₂, D, E, Folsäure, Kalzium-D-Pantothenat (B₃), Nikotinsäure (PP), Biotin, Askorbinsäure oder Natriumaskorbat verwendet werden, wobei diesen Vitaminen der Reihe nach folgende Mengen in Gramm zugehören: 2,0-8,0; 0,02-0,06;30,0-40,0; 4,0-10,0; 4,0-8,0; 4,0-10,0; 0,01-0,03; 1,0-4,0; 25,0-35,0; 60,0-70,0; 0,5-1,0 und 300,0-400,0.

Das Getränk gemäß der Erfindung weist keine Nebenwirkungen auf, über die alkoholhaltige Getränke verfügen, die auf Weinspiritusbasis hergestellt werden. Außerdem ist das Getränk technologisch wirtschaftlich und umweltfreundlich, da es bei seiner Herstellung keine Emissionen gibt, wie dies bei der Spirituosenherstellung der Fall ist. Das Getränk verfügt über besondere organoleptische Eigenschaften, schmeckt gut und ist gesundheitsunschädlich (beispielsweise für Leber, Magen, Gefäßsystem usw.). Stickstoffdioxid ist ein farbloses Gas mit leichtem, angenehmen Geruch und süßlichem Geschmack; es ist schwerer als Luft (relative Dichte 1,527) und im Verhältnis 1:2 wasserlöslich. Unter einer Temperatur von 0° C und einem Druck von 30 atm wird es zu einer farblosen Flüssigkeit verdickt.

Gemäß der Erfindung enthält das Getränk auf Stickstoffdioxidbasis eine Flüssigkeit als Kernkomponente, die mit Stickstoffdioxid angereichert wird, wobei Stickstoffdioxid unter einer Temperatur von 1-25° C und einem Druck von 1-21 atm in einer Menge eingebracht wird, die 40 g pro 1 I flüssige Basis nicht überschreitet. Die flüssige Basis wird nach Standardtechnologie aufbereitet. Es können dabei Mineral- bzw. Trinkwasser oder Saft verwendet werden. Trinkwasser als flüssige Basis wird zuerst gereinigt, geklärt, desinfiziert und von Eisen befreit. Dann erfolgt eine Desinfektion durch Filtern, Chloren, Ozonisieren und ein Bearbeiten mit Silberionen, Bakterizidstrahlung oder Ultraschallwellen. Das Wasser wird auch auf den benötigten Salzgehalt enthärtet. Wenn als flüssige Basis Fruchtsäfte (Orangen-, Zitronen-, Apfel-, Pampelmusen-, Mangosaft u. a. oder deren Gemisch) verwendet werden, werden diese zuerst gefiltert und dann einem Verschnittbehälter zugeführt. Bei Verwendung von Saftkonzentraten werden diese gefiltert, und dann werden die Ausgangssäfte wiederhergestellt. Danach wird in die flüssige Menge Stickstoffdioxid mit höchstens 40 g pro 1 I flüssige Basis unter einer Temperatur von 1-25° C und unter einem Druck von 1-21 atm eingebracht.

Vor der Einbringung des Stickstoffdioxids kann in die flüssige Basis zusätzlich Zucker als Zuckersirup oder Süßstoff, beispielsweise Aspartam, Stewiosid, Sweetly, Riosan u. a., eingebracht werden. Auch Vitamine können eingebracht werden, beispielsweise Vitamin B oder C. Danach werden unter Rühren nacheinander Spurenelemente, wie Eisen, Kalzium, Mangan u. a. eingebracht. In die flüssige Basis werden zusätzlich medizinische Präparate als Vitaminmix von A, B₁, B₂, B₆, B₁₂, D, E, Folsäure, Calcium-D-Pantothenat (B₃), Nikotinsäure (PP), Biotin, Askorbinsäure oder Natriumaskorbat eingebracht, wobei diese Stoffe nacheinander in folgenden Grammmengen enthalten sind: 2,0-8,0; 0,02-0,06;30,0-40,0; 4,0-10,0; 4,0-8,0; 4,0-10,0; 0,01-0,03; 1,0-4,0; 25,0-35,0; 60,0-70,0; 0,5-1,0 und 300,0-400,0.

Der somit erhaltene Verschnitt wird sorgfältig innerhalb von 10-14 Minuten gerührt, gefiltert und in seinen Volumen bis zur vorgegebenen Menge durch Zugabe der flüssigen Basis aufgefüllt. Das gewonnene Getränk kann mit Kohlenstoffdioxid oder Sauerstoff bzw. einem Gemisch aus beiden angereichert und danach abgefüllt werden.

### Beispiel 1

Das Getränk wird wie oben beschrieben aufbereitet. Es werden folgende Zutaten pro 1l flüssige Basis verwendet:
Stickstoffdioxid 5 g,
der Rest ist flüssige Basis.

### Beispiel 2

Das Getränk wird nach Beispiel 1 aufbereitet mit folgender Zusammensetzung:
Stickstoffdioxid 4 g,
Vitamin B₁₂, Menge 5 mg,
Rest Mineralwasser mittlerer Mineralisation.

### Beispiel 3

Das Getränk wird nach Beispiel 1 aufbereitet mit folgender Zusammensetzung:
Stickstoffdioxid 8 g,
Vitamin C, Menge 150 mg,
Eisen 1,1 mg,
Rest Trinkwasser.

### Beispiel 4

Das Getränk wird nach Beispiel 1 aufbereitet mit folgender Zusammensetzung:
Stickstoffdioxid 7 g,
Medizinisches Präparat 430,53 g,
Zink 0,5 mg,
Rest Orangensaft;
Das medizinische Präparat stellt dabei ein Gemisch aus 2,0 g Vitamin A, 0,02 g Vitamin B₁, 30,0 g Vitamin B₂, 4,0 g Vitamin B₆, 4,0 g Vitamin B₁₂, 4,0 g Vitamin D, 0,01 g Vitamin E; 1,0 g Folsäure; 25,0 g Kalzium-D-Pantothenat (Vitamin B₃), 60,0 g Nikotinsäure (Vitamin PP), 0,5 g Biotin und 300 g Askorbinsäure oder Natriumaskorbat dar.

### Beispiel 5

Das Getränk wird nach Beispiel 1 aufbereitet mit folgender Zusammensetzung:
Stickstoffdioxid 7 g,
Medizinisches Präparat 586,09 g,
Zink 0,5 mg,
Rest Orangensaft;
Das medizinische Präparat stellt dabei ein Gemisch aus 8,0 g Vitamin A, 0,06 g Vitamin B₁, 40,0 g Vitamin B₂, 10,0 g Vitamin B₆, 8,0 g Vitamin B₁₂, 10,0 g Vitamin D, 0,03 g Vitamin E, 4,0 g Folsäure, 35,5 g Kalzium-D-Pantothenat (Vitamin B₃), 70,0 g Nikotinsäure (Vitamin PP), 1,0 g Biotin und 400 g Askorbinsäure oder Natriumaskorbat dar.

Das Getränk behält für längere Zeit seine Geschmacks- und Aromaeigenschaften. Die Lagerdauer beträgt 1-1,5 Jahre im Vergleich zum Prototyp. Das Getränk gemäß der Erfindung mit dem in flüssiger Basis gelösten Stickstoffdioxid verfügt über eine berauschende und belustigende Wirkung.

## Patentansprüche

1. Getränk aus einer flüssigen Basis und Stickstoffdioxid,
**dadurch gekennzeichnet,**
**dass** Stickstoffdioxid in einer Menge von höchstens 40 g pro 1 I flüssige Basis verwendet wird, wobei es unter einer Temperatur von 1-25° C und einem Druck von 1-21 atm eingebracht wird.

2. Getränk nach Anspruch 1,
**dadurch gekennzeichnet,**
**dass** es als flüssige Basis Saft oder verdünnten Saft enthält.

3. Getränk nach Anspruch 1,
**dadurch gekennzeichnet,**
**dass** es als flüssige Basis ein leicht alkoholhaltiges Getränk enthält.

4. Getränk nach Anspruch 1,
**dadurch gekennzeichnet,**
**dass** es als flüssige Basis ein alkoholfreies Getränk enthält.

5. Getränk nach Anspruch 1,
**dadurch gekennzeichnet,**
**dass** es als flüssige Basis ein alkoholhaltiges Getränk enthält.

6. Getränk nach Anspruch 1,
**dadurch gekennzeichnet,**
**dass** es als flüssige Basis Bier enthält.

7. Getränk nach Anspruch 1,
**dadurch gekennzeichnet,**
**dass** es als flüssige Basis Trink- bzw. Mineralwasser enthält.

8. Getränk nach Anspruch 1,
**dadurch gekennzeichnet,**
**dass** es zusätzlich Zucker oder Süßstoffe enthält.

9. Getränk nach Anspruch 1,
**dadurch gekennzeichnet,**
**dass** es zusätzlich Vitamine enthält.

10. Getränk nach Anspruch 1,
**dadurch gekennzeichnet,**
**dass** es zusätzlich Spurenelemente enthält.

11. Getränk nach Anspruch 1,
**dadurch gekennzeichnet,**
**dass** es zusätzlich Kohlensäuregas bzw. Sauerstoff oder ein Gemisch aus beiden enthält.
